# EUROPÄISCHE PATENTSCHRIFT

(11) **EP 1 259 557 B1**
(45) Veröffentlichungstag und Bekanntmachung des Hinweises auf die Patenterteilung: **04.05.2005**
(21) Anmeldenummer: 01903689.6
(22) Anmeldetag: 02.02.2001
(51) Int. Cl.: C08G 2/28, C08G 2/18, C08G 2/08, B29C 47/76, B29C 47/50

(54) **VERFAHREN ZUR HERSTELLUNG VON POLYOXYMETHYLENEN**
METHOD FOR PRODUCTION OF POLYOXYMETHYLENES
PROCEDE DE PRODUCTION DE POLYOXYMETHYLENES

(30) Priorität: 10.02.2000 DE 10006037
(43) Veröffentlichungstag der Anmeldung: 27.11.2002
(73) Patentinhaber: BASF AKTIENGESELLSCHAFT, 67056 Ludwigshafen (DE)
(72) Erfinder: MOURS, Marian, 67256 Weisenheim (DE); ANDERLIK, Rainer, 69126 Heidelberg (DE); EGBERS, Gitta, 67067 Ludwigshafen (DE); KIRSCHEY, Michael, 63457 Hanau-Grossauheim (DE); ROOS, Martin, 45721 Haltern-Sythen (DE)
(86) Internationale Anmeldenummer: PCT/EP2001/001135
(87) Internationale Veröffentlichungsnummer: WO 2001/058974

(56) Entgegenhaltungen:
- US-A- 4 850 835
- US-A- 5 587 449

## Beschreibung

Die Erfindung betrifft ein verbessertes kontinuierliches Verfahren zur Herstellung von Polyoxymethylenen.

Es ist bekannt, daß Oxymethylenpolymere durch kontinuierliche Massepolymerisation der Monomeren in Gegenwart kationisch wirkender Initiatoren hergestellt werden können. Diese Polymerisation wird häufig in Knetern oder Extrudern durchgeführt. Dabei kann die Temperaturführung so erfolgen, daß das entstehende Oxymethylenpolymer entweder in fester Form (DE-A 1 161 421, DE-A 1 495 228, DE-A 1 720 358, DE-A 3 018 898) oder auch als Schmelze (DE-A 3 147 309) anfällt. Die Aufarbeitung des in fester Form anfallenden Polymers ist bekannt siehe: DE-A 3147309, DE-A 3628561, EP-A 678535, EP-A 699695 und DE-A 4423617.

Das als Schmelze anfallende Polymer wird in einem nachgeschalteten Entgasungs- und Konfektionierreaktor weiterverarbeitet. Die Schmelze wird dabei direkt aus dem Extruder in diesen Reaktor gefördert, ohne zwischen diesen Verfahrensstufen eine Phasenänderung zu erfahren (DE-A 3 147 309). In diesem nachgeschalteten Reaktor findet der thermische Abbau der instabilen Kettenenden des Polymeren statt. Die Entfernung der nicht umgesetzten Monomeren und der beim thermischen Abbau entstehenden Zersetzungsprodukte, insbesondere Formaldehyd, erfolgt durch Verdampfen, meist in Extrudern mit Entgasungsvorrichtungen.

Da die eingesetzten Monomeren in der Regel nicht vollständig zum Polymeren umgesetzt werden, üben diese durch ihren Dampfdruck eine aufschäumende Wirkung auf die Polymerschmelze aus, sobald die Schmelze auf Atmosphärendruck entspannt wird (s. DE-A 3 147 309).

Aufgabe der vorliegenden Erfindung war es daher, ein verbessertes kontinuierliches Verfahren zur Herstellung von Polyoxymethylenen zu Verfügung zu stellten, welches folgende Vorteile gegenüber dem Stand der Technik aufweist:

Die Neigung zur Schaumbildung bei der Entgasung soll reduziert sowie die Entstehung von Feinanteil bei der Granulierung minimiert werden. Das Granulat soll kompakt sein. Die Durchsätze sollen auf dem Konfektionierungsextruder erhöht und der Energiebedarf erniedrigt werden.

Demgemäß wurde ein kontinuierliches Verfahren zur Herstellung von Polyoxymethylenhomo- oder copolymerisaten durch Massepolymerisation der Monomeren in Gegenwart kationisch wirkender Initiatoren sowie gegebenenfalls in Gegenwart von Reglern gefunden, wobei während der Polymerisation sowohl die Monomeren als auch das Polymerisat in geschmolzener Form vorliegen und man anschließend das Polymerisat gegebenenfalls desaktiviert, die Schmelze austrägt, kühlt und granuliert, das dadurch gekennzeichnet ist, daß man das Polymerisat unter erhöhtem Druck und in Anwesenheit einer Flüssigkeit austrägt, kühlt und granuliert.

Das Verfahren kann grundsätzlich auf jeglichen Schneckenmaschinen mit hoher Mischwirkung durchgeführt werden. Bevorzugte Apparate sind Extruder, Busskneter und Strömungsrohre mit oder ohne statische Mischerelemente, wobei Zweischneckenextruder bevorzugt sind.

In einem ersten Schritt wird beim erfindungsgemäßen Verfahren Polyoxymethylenhomo- oder copolymerisat vorgelegt und in einer vorzugsweise beheizten Zone aufgeschmolzen.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 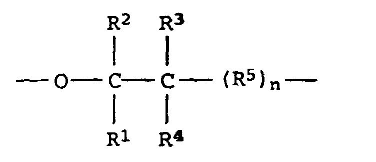 enthalten, wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 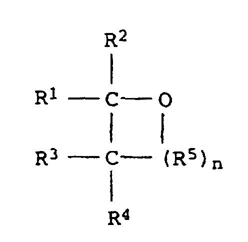 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 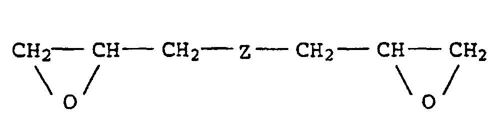 und/oder 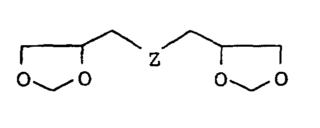 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Durch das aufgeschmolzene Polymerisat entsteht bei der folgenden Polymerisation eine sogenannte Schmelzeabdichtung, damit flüchtige Bestandteile beispielsweise im Extruder verbleiben. In die Polymerschmelze dosiert man vorstehend genannte Monomere oder deren Mischungen gemeinsam oder nacheinander mit kationisch wirkenden Initiatoren. Vorzugsweise beträgt die Temperatur der Reakionsmischung bei der Dosierung von 62 bis 114°C, insbesondere 70 bis 90°C.

Das erfindungsgemäße Verfahren wird bevorzugt für die Homo- und die Copolymerisation von Trioxan angewandt. Als Monomeres kann aber grundsätzlich jegliches vorstehend beschriebene Monomere, beispielsweise auch Tetroxan eingesetzt werden.

Die Monomeren, beispielsweise Trioxan, werden bevorzugt im geschmolzenen Zustand zudosiert, im allgemeinen bei Temperaturen von 60 bis 120°C. Da die Polymerisation im allgemeinen exotherm verläuft, ist es lediglich bei Beginn des erfindungsgemäßen verfahrens notwendig, durch Zufuhr von Energie das Polymerisat aufzuschmelzen. Anschließend reicht die entstehende Polymerisationswärme aus, um das gebildete Polyoxymethylenhomo- oder copolymerisat aufzuschmelzen.

Die Molekulargewichte des Polymeren können gegebenenfalls durch die bei der (Trioxan)polymerisation üblichen Regler auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden läßt, in Frage. Die Regler werden in Mengen von 10 bis 10 000 ppm, vorzugsweise von 100 bis 1 000 ppm, eingesetzt.

Als Initiatoren werden die bei der (Trioxan)polymerisation üblichen kationischen Starter verwendet. Es eignen sich Protonensäuren, wie fluorierte oder chlorierte Alkyl- und Arylsulfonsäuren, z.B. Trifluormethansulfonsäure oder Lewis-Säuren, wie z.B. Zinntetrachlorid, Arsenpentafluorid, Phosphorsäurepentafluorid und Bortrifluorid sowie deren Komplexverbindungen und salzartige Verbindungen, z.B. Bortrifluorid-Etherate und Triphenylmethylenhexafluorophosphat. Die Katalysatoren werden in Mengen von etwa 0,01 bis 1 000 ppm, vorzugsweise 0,05 bis 10 ppm, eingesetzt. Im allgemeinen empfiehlt es sich, den Katalysator in verdünnter Form zuzusetzen, vorzugsweise in Konzentrationen von 0,005 bis 5 Gew.-%. Als Lösungsmittel hierfür können inerte Verbindungen wie aliphatische, cycloaliphatische Kohlenwasserstoffe, halogenierte aliphatische Kohlenwasserstoffe, Glykolether usw. verwendet werden.

Monomere, Initiatoren und gegebenenfalls Regler können auf beliebige Weise vorgemischt oder auch getrennt voneinander der Polymerisationsreaktor zugegeben werden. Ferner können entlang des Reaktors Comonomerdosierstellen vorgesehen sein.

Erfindungsgemäß sind Temperatur und Druck in der Polymerisationszone so zu wählen, daß Monomere und Polymerisat in geschmolzener Form vorliegen. Beispielsweise schmilzt Trioxan bei ca. 60 bis 65°C, der Siedepunkt bei Normaldruck beträgt 115°C. Da die Polymerisationstemperaturen höher liegen, erfolgt in der Regel die Polymerisation bei erhöhtem Druck, vorzugsweise von 1,5 bis 500 bar, insbesondere von 5 bis 50 bar. Unter den Reaktionsbedingungen steht das Trioxan im Gleichgewicht mit etwa 1,5 bis 2 % Formaldehyd, das im geschlossenen System zumindest teilweise gasförmig vorliegt. Das Oxymethylenhomopolymerisat hat einen Schmelzpunkt von etwa 176°C; bei Einbau verhältnismäßig großer Mengen Comonomerer kann der Schmelzpunkt bis auf etwa 150°C sinken, durch nicht umgesetztes Trioxan kann er noch weiter erniedrigt werden. Die Massetemperatur im Polymerisationsreaktor sollte 300°C nicht überschreiten, da bei derart hohen Temperaturen Oxymethylen-Polymere sich zersetzen. Der besonders bevorzugte Temperaturbereich beträgt 150° bis 200°C. Die Massetemperatur der Monomer/Polymer-Mischung läßt sich nur sehr schwer exakt messen; einen Anhaltspunkt liefert die Außentemperatur des Polymerisationsreaktors. Wesentlich ist, daß das Polymerisat in geschmolzener Form anfällt.

Die Verweilzeit der Polymerisationsmischung in der Polymerisationszone beträgt vorzugsweise 0,1 bis 20 min, insbesondere 0,4 bis 5 min. Die Polymerisation wird vorzugsweise bis zu einem Umsatz von mindestens 30 %, insbesondere mehr als 60 % geführt. Unter günstigen Bedingungen lassen sich auch Umsätze von 80 % und darüber erzielen.

Vorzugsweise wird direkt anschließend an die Polymerisation die Polymerisationsmischung desaktiviert, ohne daß eine Phasenveränderung erfolgt.

Die Desaktivierung der Katalysatorreste erfolgt in der Regel durch Zugabe von Desaktivatoren zur Polymerisationsschmelze. Geeignete Desaktivatoren sind z.B. Ammoniak, aliphatische und aromatische Amine, Alkohole, basisch reagierende Salze, wie Soda und Borax, ferner auch Wasser. Diese werden üblicherweise den Polymeren in Mengen von vorzugsweise bis zu 1 Gew.-% zugesetzt.

Der Desaktivierungsreaktor ist gegenüber dem Polymerisationsreaktor räumlich so abgetrennt, daß die Polymer/Monopolymer-Schmelze ungehindert übertreten kann, das Eindringen der Desaktivatoren in den Polymerisationsreaktor aber sicher vermieden wird. Die Abtrennung erfolgt durch eingebaute Engpässe, die die Strömungsgeschwindigkeit der Schmelze lokal erhöhen, im Falle der Verwendung von Extrudern z.B. durch Stauscheiben. Der Desaktivierungsreaktorist so ausgebildet, daß die Polymer/Monomer-Schmelze in kurzer Zeit intensiv durchmischt wird. Dies kann in der Praxis bei Extrudern durch Einbau besonderer Knetelemente oder Rückmischelemente erreicht werden. Die Temperatur im Desaktivierungsreaktor beträgt vorzugsweise von 150 bis 300°C. Es ist ebenso möglich, der Schmelze bereits im Desaktivierungsreaktor, bevorzugt zusammen mit den Desaktivatoren, Stabilisatoren zuzusetzen.

Gemäß einer weiteren bevorzugten Ausführungsform des erfindungsgemäßen Verfahrens ist es auch möglich, die Desaktivierung erst nach der nachstehend beschriebenen Druckgranulierung durchzuführen, beispielsweise durch Aufsprühen auf das Roh-POM-Granulat.

Gemäß dem erfindungsgemäßen Verfahren trägt man die Schmelze aus, kühlt und granuliert, wobei es wesentlich ist, daß man das Polymerisat unter erhöhtem Druck und in Anwesenheit einer Flüssigkeit austrägt, kühlt und granuliert.

Geeignete Vorrichtungen für eine sogenannte Druckgranulierung sind beispielsweise senkrecht stehende Rohre mit statischen Druck (durch die Flüssigkeitssäule) oder Rohre mit Querschnittsverengungen, wobei eine kreisförmige Anordnung der Rohre aus ökonomischer Sicht (Flüssigkeitsverbrauch) besonders bevorzugt ist.

Der Druck in der Austragungsvorrichtung (Schneidkammer) orientiert sich im wesentlichen am Dampfdruck der eingesetzten Monomeren und sollte oberhalb dieses Dampfdruckes bei Austrittstemperatur der Polymerschmelze liegen.

Der Druck in der Schneidkammer ergibt sich aus der Wahl der Rohrleitung, die zwischen der Schneidkammer und der Zentrifuge angeordnet ist. Die Querschnittsfläche, die Länge, die Anzahl und Art der Rohrbögen, die Querschnittsveränderungen und die Durchflußmenge legen im wesentlichen den Druckverbrauch des Rohrleitungssystem fest. Vorzugsweise werden hohe Drücke durch lange Rohrleitungen erzielt.

Im allgemeinen beträgt der Druck von 1,2 bis 200, vorzugsweise von 2 bis 50 bar. Geeignete Flüssigkeiten sind insbesondere solche, die eine hohe Wärmekapazität aufweisen und nicht toxisch sind, z.B. Öle wie Paraffinöle, Wärmeträgeröle wie Dowtherm® oder Marlotherm®.

Bevorzugte Flüssigkeit ist Wasser.

Die Temperatur des Flüssigkeitsstromes beträgt im allgemeinen 20 bis 95°C, insbesondere von 35 bis 75°C. Durch den Flüssigkeitsstrom wird die Schmelze (ohne Austritt der Monomeren) gekühlt. Zur Abtrennung von der Austrittsdüse können beispielsweise rotierende Messer oder Messerwalzen angewandt werden, welche vorzugsweise gegenüber der Austrittsdüse angebracht sind.

Das Flüssigkeits/Granulat-Gemisch wird anschließend durch geeignete Vorrichtungen wie Zentrifugen (rotierender Zentrifugenkorb) oder, Zyklone sowie Pralltrockner getrennt.

Die Verweilzeit in der Flüssigkeit beträgt vorzugsweise 0,1 Sek. bis 4 Min., vorzugsweise von 0,55 bis 2 min. und insbesondere 1 bis 40 Sekunden.

Die Flüssigkeit wird vorteilhafterweise in den Kreislauf zurückgeführt und das Granulat anschließend getrocknet sowie gegebenenfalls vorentgast.

Dazu werden geeignete Vorrichtungen wie Fließbetttrockner, Heißlufttrockner oder Vakuumtrockner sowie Kombinationen dieser eingesetzt. Auch Strahlungstrockner (Infrarotstrahlen oder Mikrowellen) sind bekannt. Dabei wird dem Granulat Energie zugeführt, welche zum Aufheizen des Granulats und zur Entfernung von weiteren Teilen der Restflüssigkeit sowie Anteilen der nicht reagierten Monomeren dient.

Die Granulattemperatur beträgt dabei zwischen 25 und 150°C, bevorzugt zwischen 65 und 120°C.

In einer bevorzugten Ausführungsform des erfindungsgemäßen Verfahrens wird das Rohe POM vorentgast, womit sich der Durchsatz auf dem Konfektionierungsextruder erhöht.

Durch die erfindungsgemäße Fahrweise erhält man ein kompaktes, nahezu kugelförmiges Granulat, wobei die Entstehung von Feinanteilen und Aufschäumen gemäß des Standes der Technik vermieden wird. Anschließend kann das entstandene Polyoxymethylenpolymerisat mit üblichen Additiven wie Stabilisatoren, Kautschuken, Füllstoffen in üblicher Weise weiterverarbeitet werden.

## Patentansprüche

1. Kontinuierliches Verfahren zur Herstellung von Polyoxymethylenhomo- oder copolymerisaten durch Massepolymerisation der Monomeren in Gegenwart kationisch wirkender Initiatoren sowie gegebenenfalls in Gegenwart von Reglern, wobei während der Polymerisation sowohl die Monomeren als auch das Polymerisat in geschmolzener Form vorliegen und man anschließend das Polymerisat gegebenenfalls desaktiviert, die Schmelze austrägt, kühlt und granuliert, **dadurch gekennzeichnet, daß** man das Polymerisat unter erhöhtem Druck und in Anwesenheit einer Flüssigkeit austrägt, kühlt und granuliert.

2. Verfahren nach Anspruch 1, **dadurch gekennzeichnet, daß** man in einem weiteren Schritt das Polymerisat von der Flüssigkeit trennt und gegebenenfalls anschließend desaktiviert.

3. Verfahren nach den Ansprüchen 1 oder 2, **dadurch gekennzeichnet, daß** der Druck 1,2 bis 200 bar beträgt.

4. Verfahren nach den Ansprüchen 1 bis 3, **dadurch gekennzeichnet, daß** die Flüssigkeit aus Wasser oder Ölen oder deren Mischungen besteht.

## Claims

1. A continuous process for preparing polyoxymethylene homo― or copolymers by bulk polymerization of the monomers in the presence of cationic initiators, and also, if desired, in the presence of regulators, where during the polymerization both the monomers and the polymer are present in molten form and, if desired, the polymer is then deactivated, and the melt is discharged, cooled and pelletized, which comprises discharging, cooling and pelletizing the polymer at elevated pressure and in the presence of a liquid.

2. A process as claimed in claim 1, wherein, in another step, the polymer is separated from the liquid and, if desired, then deactivated.

3. A process as claimed in claim 1 or 2, wherein the pressure is from 1.2 to 200 bar.

4. A process as claimed in any of claims 1 to 3, wherein the liquid is composed of water or of oils or of a mixture of these.

## Revendications

1. Procédé continu de préparation d'homopolymères ou de copolymères de polyoxyméthylène par polymérisation en masse des monomères en présence d'amorceurs à action cationique ainsi qu'éventuellement en présence de régulateurs, dans lequel, pendant la polymérisation, aussi bien les monomères que le polymère se présentent sous une forme fondue et on désactive ensuite éventuellement le polymère, et évacue, refroidit et granule la masse fondue, **caractérisé en ce qu'**on évacue, refroidit et granule le polymère sous une pression élevée et en présence d'un liquide.

2. Procédé suivant la revendication 1, **caractérisé en ce que**, dans une étape supplémentaire, on sépare le polymère du liquide et on le désactive éventuellement ensuite.

3. Procédé suivant l'une des revendications 1 et 2, **caractérisé en ce que** la pression est de 1,2 à 200 bars.

4. Procédé suivant les revendications 1 à 3, **caractérisé en ce que** le liquide est constitué d'eau ou d'huiles ou de leurs mélanges.
